# EUROPÄISCHE PATENTSCHRIFT

(11) **EP 1 355 095 B1**
(45) Veröffentlichungstag und Bekanntmachung des Hinweises auf die Patenterteilung: **21.06.2006**
(21) Anmeldenummer: 03008330.7
(22) Anmeldetag: 10.04.2003
(51) Int. Cl.: F16K 11/085

(54) **Vierwegemischventil**
Four way mixing valve
Vanne mélangeur à quatre voies

(30) Priorität: 16.04.2002 DE 10216749
(43) Veröffentlichungstag der Anmeldung: 22.10.2003
(73) Patentinhaber: Albert, Traugott, 08523 Plauen (DE)
(72) Erfinder: Albert, Traugott, 08523 Plauen (DE); Spinnler, Rolf, 08527 Plauen (DE); Fischer, Frank, 07973 Greiz (DE)

(56) Entgegenhaltungen:
- EP-A- 0 537 424
- DE-A- 19 925 010
- DE-B- 1 283 625
- FR-A- 1 530 944
- FR-A- 2 733 566

## Beschreibung

Die Erfindung betrifft ein Vierwegemischventil mit drei Zuströmöffnungen und einer Abströmöffnung, welches insbesondere in Heizungs- und Kühlanlagen mit flüssigen Wärme- bzw. Kälteträgermedien einsetzbar ausgebildet ist. Dazu weist es bevorzugt ein abgedeckeltes, druckdichtes und zylindrisches Gehäuse auf, wobei vier gleichmäßig am Umfang verteilten Abgänge für Rohrleitungsanschlüsse vorgesehen sind.

Die umfassende Verbesserung des Wärmeschutzes von Gebäuden führt zielgerichtet zu neuartigen Temperiermethoden. Um mit möglichst niedrigen Temperaturen arbeiten zu können und dabei wirtschaftlich zu betreibende Wärmeerzeuger, z.B. die Wärmepumpe, zum Einsatz zu bringen, werden Flächenheizungen in Form von Fußboden-, Wand- und Deckenheizungen oder thermisch aktive Geschoßdecken ausgebildet. Erhalten die Gebäude zudem noch großflächige Thermoverglasungen, so ergibt sich das Problem der Kühlung bei sommerlichen Temperaturen. Die Großflächenheizungen ermöglichen eine Betriebsweise bei herabgesetzten Temperaturen bis hinein in den Kühlbereich. Dabei ist die Wärmepumpe ein sehr hilfreiches Mittel, da sich mit ihr Heiz- bzw. Kühlmediumtemperaturen von ca. +55 bis +10° C auf unkomplizierte Weise erreichen lassen.

Wenn große Temperierflächen zum Heizen und zum Kühlen angewendet und vom gleichen Temperiermedium durchflossen werden, so benötigt man Regelarmaturen, mit deren Hilfe der gesamte Heiz-Kühl-Temperaturbereich in einem Zuge kontinuierlich durchfahren werden kann. Dabei könnte eine solche Vierwege-Regelarmatur so beschaffen sein, dass von einer Seite Heizwasser aus einem Wärmeerzeuger und von der anderen Seite Kühlwasser aus einer Kühlvorrichtung zugeführt werden. Die Regelarmatur hätte dann die Aufgabe, das aus ihr abströmende Medium durch Beimischung von Rücklaufwasser auf die erforderliche Temperatur zu bringen.

Unabhängig von dem vorstehend beschriebenen Anwendungsgebiet für eine neue Regelarmatur gibt es andersartige Einsatzgebiete für Vierwege-Regelarmaturen mit gleichartigem konstruktivem Aufbau.

In der modernen Heizungstechnik ist es üblich, die Gebäudeheizungsanlagen in Abhängigkeit der veränderlichen äußeren Witterungsbedingungen mit Heizmedium unterschiedlicher Temperaturen zu betreiben.

Das wird erreicht, indem man den Wärmeerzeuger eine bestimmte witterungsgeführte Vorlauftemperatur-Fahrkurve vorgibt. Während des praktischen Betriebs ergeben sich jedoch oft erhebliche Temperaturschwankungen der Vorlauftemperatur, insbesondere dann, wenn die kontinuierliche Fahrweise durch Ladevorgänge zur Warmwasserbereitung o. ä. unterbrochen wird.

Den Ausgleich dieser Schwankungen erreicht man u. a. durch Verwendung von Dreiwege- und Vierwegemischventilen, die den Wärmeerzeugern nachgeschaltet werden. Diese Mehrwegemischventile mischen dem vom Wärmeerzeuger kommenden heißen Vorlaufwasser kälteres aus dem Heizsystem zurückströmendes Heizwasser in unterschiedlichen Mischungsverhältnissen bei und stellen im Vorlauf zur jeweiligen Heizungsanlage wesentlich gleichmäßigere Temperaturbedingungen her.

Während bei einem Dreiwegemischventil die Temperatur des vom Heizsystem kommenden und zum Wärmeerzeuger zurückfließenden Mediums nicht verändert wird, haben die bisher angewandten Vierwegemischventile die zusätzliche Aufgabe, die Temperatur des Rücklaufwassers in gewissen Grenzen anzuheben.

Dadurch können insbesondere bei mit Heizöl betriebenen Kesseln Taupunktunterschreitungen an den Nachschaltheizflächen vermieden und Korrosionsschäden wirksam reduziert werden.

Heizungsmischventile werden aber auch angewandt, um bei Anlagen mit einem Wärmeerzeuger und mehreren Heizkreisen unterschiedliche Vorlauftemperaturen zu verwirklichen. Das ist vor allem beim gemischtem Einsatz von Heizkörpern und Flächenheizungen, wie Fußboden- oder Wandheizungen, von besonderer Bedeutung.

In der modernen Heiztechnik geht man neuerdings mehr und mehr vom einschienigen Energieträgereinsatz ab und zu einer mehrschienigen Versorgung über.

Darunter fällt vor allem die Verwendung von erneuerbaren Energien, die mit zunehmender Verteuerung der fossilen Brennstoffe besondere Kostenvorteile bringt.

Für die Verbrennung von veredelten Energieträgern, wie Heizöl, Erd- und Flüssiggas etc. existiert eine hochentwickelte Gerätetechnik, die einen sparsamen Betrieb der Wärmeerzeuger, z.B. durch Brennwerttechnik und eine bedarfsgerechte Dosierung durch Modulationsfahrweise bei hohen Energieumwandlungsgraden, gestattet.

Zur Verbrennung von stückigem Holz, Holzspänen, Pellets u. a. und zur thermischen Nutzung der Solarenergie finden im Kleinerwärmezeuger-Bereich häufig Pufferspeicher Verwendung, die bei diskontinuierlicher Fahrweise der Wärmeerzeuger einen kontinuierlichen Heizbetrieb ermöglichen.

Die üblicherweise angewandten Umschalteinrichtungen, wie Dreiwege-Motor- oder - Magnetventile, führen zu komplizierten wärmetechnischen Schaltungen und darüberhinaus zu einer schwierig durchzuführenden Fahrweise der Gesamtanlage.

Deshalb ist es notwendig, ein Vierwegemischventil für Heizungs- und Kühlanlagen zu schaffen, welches den Parallelbetrieb zweier mit unterschiedlichen Energieträgern betriebener Wärmeerzeuger gestattet, zugleich der Rangfolge der Wertigkeit der beiden Energieträgerarten gerecht wird und insbesondere auch der Niedertemperaturheiztechnik Vorschub leistet. Dabei soll die Nutzung der weniger wertvollen Energie, z. B. der aus erneuerbaren Energieträgern, gegenüber der wertvollen, z. B. der von Heizöl, Vorrang haben.

Die vielen in der Heizungspraxis eingesetzten Mehrwegemischventile unterscheiden sich voneinander in ihrer konstruktiven Ausführung. So ist es üblich, die Gehäuse für Vierwegemischventil, sowie die dazugehörigen Deckel und Drehschieber aus Rotguß bzw. Messingguß herzustellen. Bei Gehäusen hat sich darüberhinaus auch die Schalenbauweise bewährt, wobei zwei durch Preßwerkzeugegeprägte Schalen aus Stahlblech zu einem Hohlkörper verschweißt werden und der von ihnen eingeschlossene, im wesentlichen zylindrische Hohlraum, in dem sich der Drehschieber bewegt, durch einen Stützring mit versteifender Funktion für den gesamten Hohlkörper gebildet wird. Die Drehschieber dieser Vierwegemischventile arbeiten in einem Drehbereich von ca. 90°.

Als Antrieb für Vierwegemischventile werden universell einsetzbare Großserien-Stellmotoren mit elektrisch begrenztem Drehwinkel (90°) verwendet.

Die Ansteuerung erfolgt durch an sich bekannte Regelsysteme mit Dreipunkt-Ausgang (AC 230V, AC 24V) oder Systeme mit einem stetigen Ausgang (AC, DC 24 V). In den meisten Fällen handelt es sich dabei um Kesselkreis- bzw. Heizkreisregler, auch in Verbindung mit Solarreglern, oder um übergeordnete DDC-Regelsysteme.

Aus der europäischen Patentanmeldung EP 0 537 424 A1 ist ein Mehrwege-Vierwegemischventil für Heizungsanlagen bekannt, welches aus einem aus zwei Schalen gebildeten und zentrisch abgedeckeltem Gehäuse mit mindestens drei Anschlußstutzen und einem im Gehäuse zwischen Zu- und Abströmöffnungen begrenzenden Trennwänden verstellbaren Drehschieber aus einem korrosionsfesten Material besteht. Der Drehschieber ist zwischen Verschlußscheiben aus ebenfalls korrosionsfestem Material angeordnet.

Nach der Erfindung sind die Zu- und Abströmöffnungen in einer Hülse aus korrsionsfestem Material angeordnet, wobei in der Hülse beidseitig zum Drehschieber Verschlußscheiben aus korrosionsfestem Material vorgesehen sind. Die Hülse überragt mit ihren Endrändern die Verschlußscheiben.

Zwischen den Verschlußscheiben und den beidseitig am Gehäuse verspannbaren, im wesentlichen formidentischen Deckeln ist in den von Hülse, Verschlußscheiben und Deckeln gebildeten Zwickeln jeweils ein Dichtungsring verspannt angeordnet.

Desweiteren sind aus der deutschen Offenlegungsschrift DE 199 25 010 A1 und der französischen Anmeldung FR 2 733 566 A1ein Mehrfach-Dreiwegemischer bzw. ein 2, 3 und 4-Wegeventil bekannt.

Die bekannten Lösungen für Mehrwegeventile, insbesondere die Lösung gemäß EP 0 537 424 A1, weisen den Nachteil auf, dass alle diese Regelarmaturen, unabhängig von der Art ihres konstruktiven Aufbaus, nur für ganz begrenzte Anwendungsgebiete einsetzbar sind.

Das Öffnen und Schließen der gemäß FR 2 733 566 A1 runden und/oder in Kombination mit dreieckigen, ovalen oder im wesentlichen dreieckigen, nach innen verrundeten Zu- und Abströmöffnungen durch den im Inneren arbeitenden Drehschieber erfolgt in nachteiliger Weise nicht immer nach einem strengen Ordnungsprinzip. Dadurch lassen sich unzulängliche, eine exakte Regelung der Heizungsanlage beeinträchtigende Mischvorgänge nicht ausschließen.

Darüberhinaus läßt die Geometrie der Innenteile - mit Ausnahme einer Rücklaufanhebung bei einem Vierwegemischventil - eine Mehrfachmischfunktion nicht zu.

Desweiteren ist eine Zusammenschaltung mehrerer Wärme- und/oder Kälteerzeuger bei Verwirklichung des Vorrangprinzips mit eine der bekannten Armaturen nicht möglich. Gleiches gilt auch für die Realisierung einer durchgängigen Fahrweise mit dem Übergang vom Heizungsbetrieb auf Kühlbetrieb und umgekehrt.

Der Erfindung liegt deshalb die Aufgabe zugrunde, die Mängel des Standes der Technik - zumindest weitgehend - aufzuheben und ein Vierwegemischventil auf Grundlage der eingangs beschriebenen Konstruktionsprinzipien zu entwickeln, das eine funktionell veränderte Gestaltung, vor allem der Innenbauteile, dahingehend aufweist, daß eine Mischeinrichtung mit verbesserten Gebrauchseigenschaften fertigungstechnisch auf einfache Weise herstellbar ist.

Diese Aufgabe wird durch die im kennzeichnenden Teil des Anspruchs 1 beschriebenen Merkmale gelöst. Die in den Unteransprüchen offenbarten Merkmale beschreiben vorteilhafte Weiterbildungen der Erfindung und zeigen konstruktive, Lösungen, welche auf verschiedene Anwendungsfälle bezogene Präzisierungen des erfindungsgemäßen Vierwegemischventils ermöglichen.

Entsprechend einer anderen Weiterbildung der Erfindung sind die beiden einseitig tropfenartig ausgeformten rechteckigen Öffnungen im gleichen Richtungssinn zueinander angeordnet.

Die Vorteile der Erfindung bestehen insbesondere darin, daß die bewährten Konstruktionsprinzipien der aus den Stand der Technik bekannten Vierwegemischventile, wie die Gußausführung oder die Schalenbauweise und der Drehschieber, die im 90°-Verstellbereich arbeiten, grundsätzlich beibehalten werden können.

Um die Winkelverhältnisse gemäß Anspruch 1 für das erforderliche Regelverhalten realisieren zu können, bedarf es im Vergleich zu den bekannten technischen Lösungen der Vergrößerung des zylindrischen Innenraumes.

Dazu ist erfindungsgemäß ein dünnwandiger zylindrischer Ring erforderlich. Die Herstellung dieses Ringes und des Drehschiebers entsprechend der erfindungsgemäßen Lösung ist ohne Schwierigkeiten mit üblichen technologischen Arbeitsmitteln der metallverarbeitenden Gewerke lösbar.

Durch die Erfindung wird in günstiger Weise eine Regelarmatur in Gestalt eines Vierwegemischventils geschaffen, die überall dort anwendbar ist, wo Heiz- und Kühlmedienströme unterschiedlicher Temperatur und Wertigkeit bei Anwendung handelsüblicher Regelsysteme in geordneter Form zu vorlauftemperaturgeregelten Medienströmen zusammenzuführen sind.

Bei Realisierung des erfindungsgemäß vorgeschlagenen Vierwegemischventils stehen dem Anlagenbau neue Regelarmaturen mit einem weiten Anwendungsspektrum zur Verfügung.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Figur 1: eine bevorzugte Ausführungsform des erfindungsgemäßen Vierwegemischventils in Schnittdarstellung,
- Figur 2: die Schnittdarstellung einer vorteilhaften Weiterbildung der in Figur 1 gezeigten Ausführungsform der Erfindung,

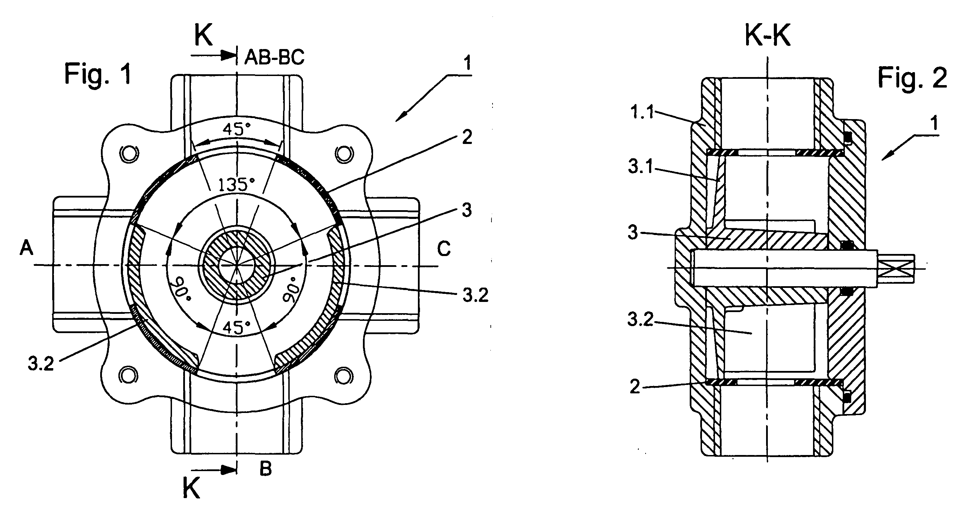

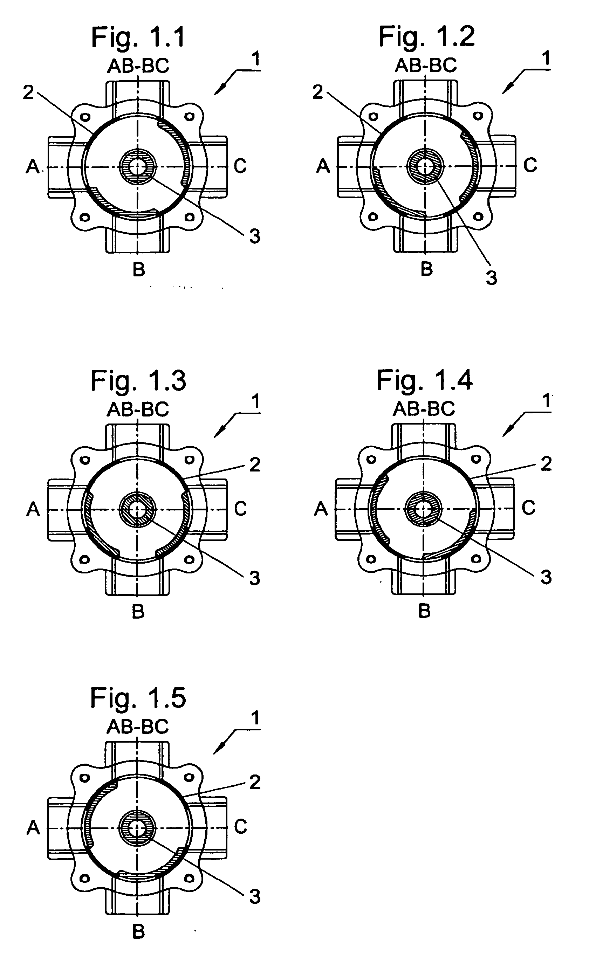

- Figuren 1.1 - 1.5: vorteilhafte Ventilstellungen einer anderen Ausführungsform der Erfindung,

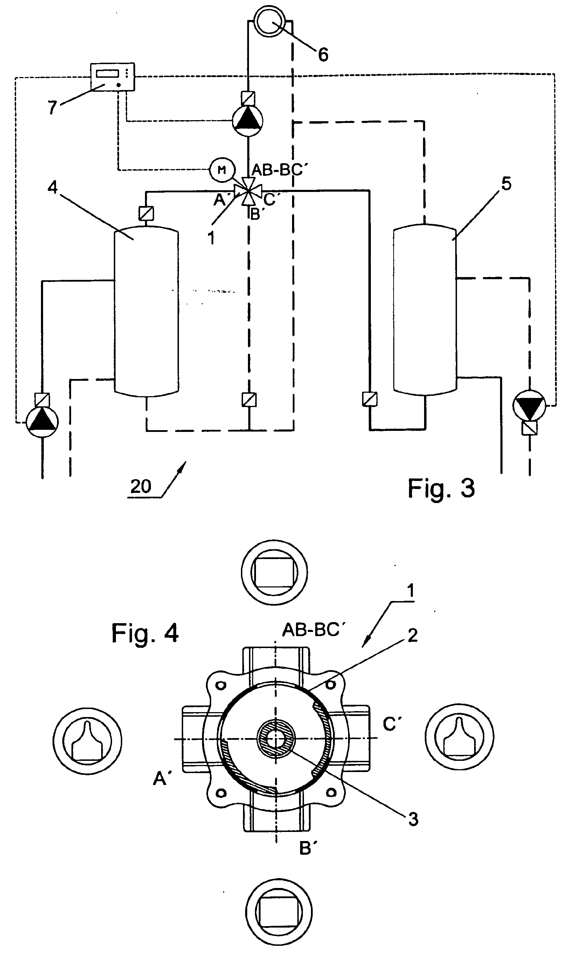

- Figur 3: eine Schaltungsanordnung mit einer bevorzugte Ausführungsform der Erfindung ,
- Figur 4: die Anordnung der Öffnungsquerschnitte des erfindungsgemäßen Vierwegemischventils für ein kombiniertes Heiz- und Kühlsystem gemäß Figur 3,

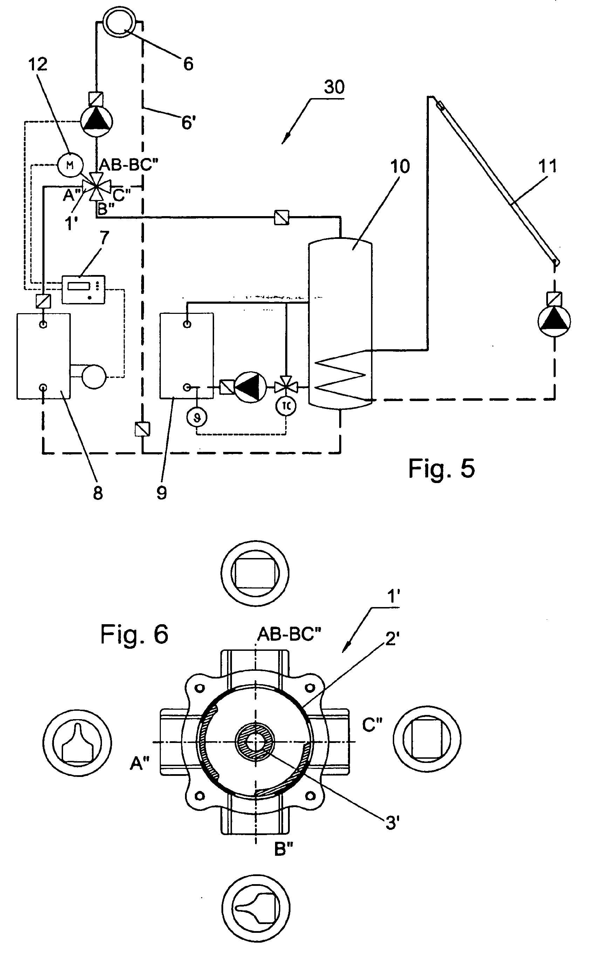

- Figur 5: eine Schaltungsanordnung mit einer anderen vorteilhaften Ausführungsform der Erfindung,
sowie
- Figur 6: die Anordnung der Öffnungsquerschnitte des Vierwegemischventils für das in Figur 5 gezeigte Heizungssystem.

Die in den Figuren 1 und 2 gezeigte Mischeinrichtung 1 besteht im wesentlichen aus dem zylindrischen Gehäuse 1.1 mit verschraubbarem Deckel in druckdichter Ausführung, dem in den zylindrischen Hohlraum des Gehäuses eingepreßten dünnwandigen Ring 2 mit den vier gleichmäßig am Umfang verteilten Öffnungen, davon eine Abströmöffnung AB-BC und drei Zuströmöffnungen A, B und C und den vier Abgängen vom Gehäuse mit Gewindemuffenanschluß für Rohrleitungen.

Im Inneren des Hohlzylinders befindet sich der drehbar gelagerte Schieber 3 mit runder Grundplatte 3.1 und den zwei darauf senkrecht stehenden Zylinderschalensegmenten 3.2, die je nach Stellung des Drehschiebers mehrere Zuströmöffnungen teilweise oder vollständig verschließen. Bei jeder Arbeitsstellung des Drehschiebers 3 ist der Abströmquerschnitt AB - BC voll geöffnet.

Um eine Mehrzweckanwendung zu ermöglichen, setzt sich die dargestellte Mischeinrichtung aus Bauteilen aus korrosionsträgem Material, vorzugweise aus Messing- bzw. Rotguß zusammen.

Aus fertigungstechnologischen Gründen und im Hinblick auf die Mehrzweckanwendung erweist es sich als vorteilhaft, den in das Gehäuse 1.1 eingepreßten dünnwandigen Ring 2 in Edelstahl auszubilden, so dass die vier Öffnungen mit definierten Querschnitten unterschiedlicher Form durch Stanzen oder mit Hilfe der Lasertechnik eingearbeitet werden können.

Der Drehschieber 3 arbeitet wie bei den bekannten Vierwegemischventilen im Drehbereich von 90° und verschließt und öffnet die Zuströmquerschnitte in bestimmter Art und Weise.

In den Figuren 1.1 bis 1.5 sind die möglichen und in der Praxis erforderlichen Vierwegemischventilstellungen in einer Horizontalschnitt-Darstellung gezeigt. Der Zuströmquerschnitt A und der Abströmquerschnitt AB - BC sind entsprechend der Stellung des Drehschiebers 3 in Figur 1.1 voll geöffnet, so dass das Strömungsmedium nur auf einem Weg fließen kann. Die Zuströmungsquerschnitte B und C sind beide geschlossen.

Gemäß Figur 1.2 öffnet sich bei Rechtsdrehung des Drehschiebers 3 der Querschnitt B und der Querschnitt A schließt, so dass sich beide Stoffströme mischen und durch AB - BC abströmen.

In Figur 1.3 ist ein Vierwegemischventil 1 mit einer Stellung des Drehschiebers 3 gezeigt, bei welcher die Querschnitte B und AB - BC bei geschlossenen Querschnitten A und C voll geöffnet sind. Bei weiterer Rechtsdrehung des Drehschiebers 3 öffnet gemäß Figur 1.4 der Querschnitt C des Vierwegemischventils 1 und der Querschnitt B wird verschlossen, so dass sich die Stoffströme aus B und C mischen können. Nach erneuter Rechtsdrehung des Drehschiebers 3 bis zu seiner Endstellung sind, wie in Figur 1.5 dargestellt, die Querschnitte AB-BC und C voll geöffnet sowie A und B geschlossen.

Die Vierwegemischeinrichtung 1 ist also so konzipiert, dass im Drehbereich von 90° grundsätzlich alle erforderlichen Ventilstellungen durchfahren werden können.

Die Mischeinrichtungen sind für verschiedene Anwendungsfälle 20 und 30 nahezu gleichartig aufgebaut und unterscheiden sich lediglich durch eine unterschiedliche Formgebung der vier Öffnungen in dem in das zylindrische Gehäuse 1.1 einzusetzenden dünnwandigen zylindrischen Ring 2, 2'.

Die in den Figuren 1 und 2 beschriebene Mischeinrichtung 1 ist für den Einsatz in einem in Figur 3 dargestellten kombinierten Heiz- und Kühlsystem 20 vorgesehen.

Hier wird im Querschnitt A' des Vierwegemischventils 1 das Heizmedium vom Wärmespeicher 4, im Querschnitt C' das Kühlmedium vom Kühlreservoire 5 und im Querschnitt B' der gemeinsame Rücklauf aus einer Heizungsanlage 6 zugeführt.

Dabei sind gemäß Figur 4 die freien Zuströmquerschnitte A' und C' des Vierwegemischventils 1 (im Vergleich zu den rechteckförmigen Querschnitten B' und AB-BC') als einseitig tropfenartig ausgeformte rechteckige Öffnungen ausgebildet, wodurch auf vorteilhafte Weise eine bis zu einem gewissen Grade gleichprozentige Regelcharakteristik ermöglicht wird.

Um die gewünschte Wirkungsweise, beispielsweise bei Heizbetrieb, zu erreichen, steht der Drehschieber 3 des Vierwegemischventils 1 in einer solchen Stellung, daß das von den Querschnitten A' und B' zuströmende Heizmedium gemischt wird. Bei Kühlbetrieb erfolgt die Mischung der Medien von den Querschnitten B' und C'. Zur witterungsgeführten Vorlauftemperaturregelung kommt dabei zweckmäßigerweise ein Regler mit Dreipunktverhalten 7 zum Einsatz.

Bei einer Mischeinrichtung für ein Heizungssystem 30 gemäß Figur 5 sind zwei parallel zueinander mit unterschiedlichen Energieträgern betriebenen Wärmeerzeugern 8, 9 und mit einem Pufferspeicher 10 mit solarthermischer Anlage 11 vorgesehen. Der Querschnitt A" des Vierwegemischventils 1 ist mit einem Öl- bzw. Gaskessel 8, der Querschnitt B" mit dem Pufferspeicher 10 und der Querschnitt C" mit dem Rücklauf 6' aus dem Heizsystem 6 verbunden.

Bei dieser Ausführung des Vierwegemischventils 1' sind zur Verbesserung der Regelgüte die freien Zuströmquerschnitte A" und B" als einseitig tropfenartig ausgeformte rechteckige Öffnungen und die freien Querschnitte C" und AB-B" rechteckig ausgebildet, wie Figur 6 zeigt.

Ist bei dem in Figur 5 dargestellten Heizungssystem 30 die Temperatur im Pufferspeicher 10 höher als die Vorlauftemperatur, die das nachgeschaltete Heizsystem 6 verlangt, so befindet sich der Drehschieber 3' in einer Stellung entsprechend Figur 1.4.

Dabei wird zwischen dem mit dem Pufferspeicher 10 verbundenenen Anschluß B" des Vierwegemischventils 1' und dem mit dem Heizungsrücklauf 6' verbundenen Anschluß C" des Vierwegemischventils 1' gemischt. Ist die Temperatur im Speicher niedriger als vom Heizsystem gefordert, so dreht der Drehschieber 3' - über den Regler 7 geregelt und angetrieben durch den Stellmotor 12 - von der Stellung gemäß Figur 1.4 über die in Figur 1.3 gezeigte Stellung die Stellung entsprechend Figur 1.2. Hier wird dem Heizkessel 8 für veredelte Brennstoffe nur so viel Heizwasser entnommen, wie zum Erreichen der geforderten Heizkreistemperatur notwendig ist. Lädt sich der Pufferspeicher 10 beispielsweise durch den Betrieb eines Holzkessels 9 oder einer solarthermischen Anlage 11 bis zur geforderten Vorlauftemperatur des Heizkreises 6 wieder auf, so dreht der Schieber 3' des Vierwegemischventils 1' bis in Stellung entsprechend Figur 1.4 zurück.

Bei dem vorstehend beschriebenen Anwendungsfall würde der Vierwegemischventil durch die elektronische Regelung des Öl- bzw. Gaskessels oder durch eine nachgeschaltete Heizkreisregelung angesteuert.

Auch im Falle der Nachrüstung eines Pufferspeichers würde das Vierwegemischventil seine Steuerimpulse von der vorhandenen Kesselkreis- oder Heizkreisregelung empfangen. Mit jeder dieser gewöhnlichen elektronischen Regelungen kann also das Wärmepotential aus der Erzeugung mit niederwertiger Rohenergie vor demjenigen mit veredelter Energie genutzt werden.

Durch Einbau des erfindungsgemäßen Vierwegemischventils 1' in ein bereits vorhandenes Heizsystem mit Öl- bzw. Gasheizkessel und die Möglichkeit seiner Ansteuerung durch fast jede marktübliche Kesselkreisregelung ist eine Nachrüstung zusätzlicher Wärmeerzeuger, wie z. B. Holzkessel oder Sonnenkollektoren zur Heizungsunterstützung, ohne großen Umbauaufwand durchführbar.

In Figur 6 ist die Anordnung der Öffnungsquerschnitte eines Vierwegemischventils 1' für das in Figur 5 gezeigte Heizungssystem schematisch dargestellt.

## Patentansprüche

1. Vierwegemischventil (1, 1') mit drei Zuströmöffnungen und einer Abströmöffnung, insbesondere für Heizungs- und Kühlanlagen mit flüssigen Wärme- bzw. Kälteträgermedien (20, 30), aufweisend ein abgedeckeltes, druckdichtes Gehäuse (1.1) mit im wesentlichen zylindrischer Form und vier, gleichmäßig am Umfang verteilten Abgängen für Rohrleitungsanschlüsse sowie einen inneren zylindrischen Hohlraum, in welchem ein formschlüssig eingefügter dünnwandiger, im wesentlichen zylindrischer Ring (2, 2') mit vier zu den Abgängen hin angeordneten Öffnungen (A, B, C, AB-BC, A', B', C', AB-BC', A", B", C" und AB-BC") vorgesehen ist, welcher die äußere Umhüllung für einen im Gehäuse drehbar gelagerten im Schwenkbereich von ca. 90° verstellbaren Schieber (3, 3'), bestehend aus einer kreisrunden Grundplatte (3.1) mit zwei darauf senkrecht stehenden Zylinderschalensegmenten (3.2) bildet, **dadurch gekennzeichnet, dass** die vier gleichmäßig am Umfang des dünnwandigen Ringes (2, 2') verteilten Öffnungen (A, B, C, AB-BC, A', B', C', AB-BC', A", B", C" und AB-BC") von dem Mittelpunkt des Ringes (2, 2') ausgesehen sich jeweils über einen Winkelbereich von 45° derart ausdehnen, dass zwischen ihnen jeweils eine über 45° geschlossene Stegfläche bestehen bleibt und die beiden auf der Grundplatte (3.1) des Drehschiebers (3, 3') stehenden Zylinderschalensegmente (3.2) von der Drehschieberachse als Mittelpunkt ausgesehen sich jeweils über einen Winkel von ca. 90° erstrecken, wobei zwischen den beiden auf der Grundplatte (3.1) des Drehschiebers (3, 3) stehenden Zylinderschalensegmenten (3.2) auf der einen Seite jeweils eine Öffnung über einen Winkel von ca. 45° und auf der anderen Seite eine solche über einen Winkel von 135° entsteht und letztere stets der Abströmöffnung (AB-BC) des Vierwegemischventils (1, 1') zugeordnet ist,
und **dass** die Öffnungen des dünnwandigen zylindrischen Rings (2,2') jeweils zwei einseitig tropfenartig ausgeformte rechteckige Öffnungen und zwei weitere Öffnungen mit im wesentlichen rechteckiger Form sind.

2. Vierwegemischventil nach Anspruch 1,
**dadurch gekennzeichnet,**
**dass** die beiden einseitig tropfenartig ausgeformten rechteckigen Öffnungen (A", B") in dem dünnwandigen Ring (2') nebeneinander an der einen Ringhälfte und die rechteckigen Öffnungen (C", AC-BC') nebeneinander an der anderen Ringhälfte angeordnet sind.

3. Vierwegemischventil nach Anspruch 2,
**dadurch gekennzeichnet,**
**dass** die beiden einseitig tropfenartig ausgeformten rechteckigen Öffnungen (A'; B") im gleichen Richtungssinn zueinander angeordnet sind.

4. Vierwegemischventil nach einem der Ansprüche 1 bis 3,
**dadurch gekennzeichnet,**
**dass** das abgedeckelte druckdichte Vierwegemischventilgehäuse (1.1) und der Drehschieber (3, 3') aus korrosionsbeständigem Material bestehen und der dünnwandige Ring (2, 2') in einem formstabilen, gut zu bearbeitenden Werkstoff ausgeführt ist.

5. Vierwegemischventil nach Anspruch 4,
**dadurch gekennzeichnet,**
**dass** das abgedeckelte druckdichte Vierwegemischventilgehäuse (1.1) und der Drehschieber (3) aus Rot- oder Messingguß, bestehen und der dünnwandige Ring (2) in Edelstahl, ausgeführt ist.

## Claims

1. Four way mixing valve (1, 1'), especially for heating or cooling systems with liquid heat-transfer or coldness-transfer medium (20, 30), having three in-flow openings and one off-flow opening, a covered, pressure-tight and cylindrical formed housing (1.1), four points of connection for line terminals, uniformly arranged at its periphery, and an internal cylindrical cavity, in which is arranged a thin-walled, essentially cylindrical formed ring (2, 2') with four openings (A, B, C, AB-BC, A', B', C', AB-BC', A", B", C" and AB-BC"), directed to these points of connection, which is forming the outer encasement for a slide valve (3, 3'), arranged in this housing, which is rotable at a swivel range of 90 degrees and which is having a circular ground plate (3.1) with two cylindrical shell segments (3.2), which are standing vertically on this ground plate,
**characterized in,**
**that** the four openings (A, B, C, AB-BC, A', B', C', AB-BC', A", B", C" and AB-BC"), uniformly arranged at the periphery of the thin-walled ring (2, 2'), are each extended - referring to the centre point of the ring (2, 2') - for an angular range of 45 degrees in a manner, that there is between each of them an area with an plane angle of 45 degrees and each of the two cylindrical shell segments (3.2), which are standing on the ground plate (3.1) of the slide valve (3, 3') cover - referring to the axle of the slide valve - approximately an angle of 90 degrees in that way, that between the two cylindrical shell segments (3.2), which are standing on the ground plate (3.1) of the slide valve (3, 3'), on one side an opening extends with an opening angle of 45 degrees and on the other side an opening extends with an opening angle of 135 degrees and the last of these openings is assigned to the off-flow opening (AB-BC) of the four way mixing valve (1, 1'),
and
**that** the openings of the thin-walled cylindrical ring (2, 2') are building each two unilateral drop-like formed rectangular openings and two further, essentially rectangular formed openings.

2. Four way mixing valve according to claim 1,
**characterized in,**
**that** the two unilateral drop-like formed rectangular openings (A", B") in the thin-walled ring (2') are arranged side by side at one half of the ring and rectangular formed openings (C", AC-BC") are arranged side by side at the other half of the ring.

3. Four way mixing valve according to claim 2,
**characterized in,**
**that** the two unilateral drop-like formed rectangular openings (A", B") are arranged referring to each other in the same sense.

4. Four way mixing valve according to claim 1 to 3,
**characterized in,**
**that** covered, pressure-tight housing (1.1) of the four way mixing valve and the rotary slide valve (3, 3') are made of corrosion-resistant material and the thin-walled ring (2, 2') is made of shape stable material, which is well treatable.

5. Four way mixing valve according to claim 4,
**characterized in,**
**that** the covered, pressure-tight housing (1.1) of the four way mixing valve and the rotary slide valve (3) are made of red brass or brass casting and the thin-walled ring (2) is made of high-grade steel.

## Revendications

1. Vanne mélangeur à quatre voies (1, 1') avec trois ouvertures d'entrée et une ouverture de sortie, particulièrement pour les installations de chauffage et de refroidissement pour caloporteur ou réfrigérant liquide (20, 30), présentant un boîtier recouvert (1.1), pressurisé et formé en substance cylindrique avec quatre raccords de branchement et une cavité interne et formé cylindrique où est disposé un anneau à paroi mince (2, 2'), formé en substance cylindrique et raccordé par forme, avec quatre ouvertures (A, B, C, AB-BC, A', B', C', AB-BC', A", B", C" et AB-BC") en direction aux raccords de branchment, qui forme la enveloppe extérieure pour un tiroir rotatif réglable (3, 3'), monté en palier tournant à peu près de 90° dans le boîtier et composé d'une plaque de base (3.1) circulaire avec deux coques à segments cylindriques (3.2), positionées vertical à cette plaque de base,
**caractérisée en ce que**,
les quatre ouvertures (A, B, C, AB-BC, A', B', C', AB-BC', A", B", C" et AB-BC"), disposés régulièrement à la périphérie du anneau à paroi mince, s'étennent, vues du centre d'anneau, sur un angle de 45°, de telle sorte, que une pièce de jonction d'un angle de 45° est existant entre les ouvertures et les deux coques à segments cylindriques (3.2), positionées à cette plaque de base (3.1) du tiroir réglable rotatif (3, 3'), vu de l'axe du tiroir réglable rotatif que le centre, s'étennent sur un angle à peu près de 90°, **en ce que** d'un côté une ouverture sur un angle de 45° est formée entre les deux coques à segments cylindriques (2, 2'), positionées à la plaque de base (3.1) du tiroir rotatif réglable (3, 3'), et d'un autre côté une ouverture sur un angle de 135° est formée et cette ouverture est toujours assignée à l'ouverture de sortie (AB-BC) de la vanne mélangeur à quatre voies (1, 1'),
et
que les ouvertures du anneau à paroi mince et formé cylindrique (2, 2') sont chaque fois deux ouvertures rectangulaires, formé unilatéral en forme de goutte et deux ouvertures formé en substance rectangulaires.

2. Vanne mélangeur à quatre voies selon la revendication 1,
**caractérisée en ce que**,
les deux ouvertures rectangulaires, formé unilatéral en forme de goutte (A", B") dans à paroi mince (2') sont positionées l'un à côté de l'autre dans une des moitiés d'anneau et les ouvertures formé en substance rectangulaires (C", AC-BC") sont positionées l'un à côté de l'autre dans l'autre moitié d'anneau.

3. Vanne mélangeur à quatre voies selon la revendication 2,
**caractérisée en ce que**,
les deux ouvertures rectangulaires, formé unilatéral en forme de goutte (A", B") sont positionées l'un envers l'autre en le même sens.

4. Vanne mélangeur à quatre voies selon la revendication 1 à 3,
**caractérisée en ce que**
le boîtier recouvert et pressurisé (1.1) de la vanne mélangeur à quatre voies et le tiroir rotatif réglable (3, 3') sont réalisés en matière résistant à la corrosion et l'anneau à paroi mince (2, 2') est réalisé en matière à stabilité de forme et à bonne ouvrabilité.

5. Vanne mélangeur à quatre voies selon la revendication 4,
**caractérisée en ce que**
le boîtier recouvert et pressurisé (1.1) de la vanne mélangeur à quatre voies et le tiroir rotatif réglable (3) sont réalisés en metal rose ou fonte en laiton et l'anneau à paroi mince (2) est réalisé en acier spécial allié.
